# EUROPEAN PATENT APPLICATION

(11) **EP 4 485 877 A1**
(43) Date of publication of application: **01.01.2025**
(21) Application number: 23831804.2
(22) Date of filing: 21.06.2023
(51) Int. Cl.: H04L 41/0897, H04L 43/20, H04W 88/08

(54) **METHOD AND ELECTRONIC DEVICE FOR CONTROLLING SCALING IN VIRTUALIZED RADIO ACCESS NETWORK**

(30) Priority: 01.07.2022 KR 20220081499; 23.09.2022 KR 20220121030
(71) Applicant: Samsung Electronics Co., Ltd., Suwon-si, Gyeonggi-do 16677 (KR)
(72) Inventor: SEO, Jihwan, Suwon-si, Gyeonggi-do 16677 (KR); OH, Sewon, Suwon-si, Gyeonggi-do 16677 (KR)
(74) Representative: Appleyard Lees IP LLP
(86) International application number: PCT/KR2023/008630
(87) International publication number: WO 2024/005444

(57) **Abstract**

A method of controlling scaling in a virtualized radio access network (vRAN), including determining a cell migration situation based on information about a key performance indicator (KPI) of a first pod; based on the cell migration situation, transmitting, to the first pod, at least one cell migration message related to a second pod with which the first pod is to perform cell migration; and in case that the cell migration being terminated, receiving a cell migration termination message from the first pod.

## Description

### [Technical Field]

The disclosure relates to a method and electronic device for controlling scaling of a virtual radio access network.

### [Background Art]

In a radio access network (RAN) system, one cell site may be connected to one distributed unit (DU), and thus, the processing capacity of the distributed unit may be determined according to the maximum traffic entering the cell site. The resources of the DU may be not used outside of peak traffic times.

A virtualized RAN (vRAN) system may perform resource pooling by virtualizing a DU or a centralized unit (CU). When the resource pooling is performed, several cell sites may be connected to the DU, and thus, the number of servers may be reduced.

In a vRAN, Kubernetes may provide a horizontal pod autoscaler (HPA), which is a feature of performing scaling for the resource pooling. The HPA may scale pods according to a preset number of pods, based on a monitored key performance indicator (KPI) reaching a preset value.

### [Disclosure]

### [Technical Solution]

In accordance with an aspect of the disclosure, a method of controlling scaling in a virtualized radio access network (vRAN) includes determining a cell migration situation based on information about a key performance indicator (KPI) of a first pod; based on the cell migration situation, transmitting, to the first pod, at least one cell migration message related to a second pod with which the first pod is to perform cell migration; and based on the cell migration being terminated, receiving a cell migration termination message from the first pod.

The information about the KPI may include information about at least one of a number of user equipments (UEs) processed by a pod, a number of cells processed by the pod, a central processing unit (CPU) utilization, a memory usage, a throughput, a radio network temporary identifier (RNTI), a block error rate (BLER), and a reference signal received power (RSRP).

Each of the first pod and the second pod may include one of a centralized unit (CU) or a distributed unit (DU).

The determining of the cell migration situation may include, based on the KPI of the first pod being less than or equal to a predetermined first value, determining the cell migration situation to be a scale-in situation, and based on the KPI of the first pod being greater than or equal to a predetermined second value, determining the cell migration situation to be a scale-out situation.

The transmitting of the at least one cell migration message may include: based on the cell migration situation being determined to be the scale-out situation, requesting a management device to generate the second pod; receiving, from the management device, a message indicating that the generating of the second pod is completed; and transmitting the at least one cell migration message to the first pod.

The transmitting of the at least one cell migration message may include, based on the cell migration situation being determined to be the scale-in situation, and based on information about an obtained KPI of the second pod, determining that the second pod is to perform the cell migration with the first pod, and the receiving of the cell migration termination message may include: based on the cell migration situation being determined to be the scale-in situation, receiving the cell migration termination message from the first pod; transmitting, to a management device, a message requesting deletion of the second pod; and receiving, from the management device, a message indicating that the deletion of the second pod is completed.

The transmitting of the at least one cell migration message may include, based on the cell migration situation being determined to be the scale-out situation, and based on a KPI of the second pod being less than or equal to a predetermined third value, transmitting, to the first pod, the at least one cell migration message related to the second pod.

The at least one cell migration message may include at least one of endpoint information corresponding to the first pod, endpoint information corresponding to the second pod, information about the cell migration situation, basis information about the cell migration situation, resource allocation information about the second pod, and scaling control request identifier (ID) information.

The cell migration completion message may include at least one of information about a completion status of the cell migration, cell migration failure reason information, KPI information at a time point of completion of the cell migration, and scaling control request identifier (ID) information.

In accordance with an aspect of the disclosure, a non-transitory computer-readable recording medium has recorded thereon instructions which, when executed by at least one processor, cause the at least one processor to: determine a cell migration situation, based on information about a key performance indicator (KPI) of a first pod; based on the cell migration situation, transmit, to the first pod, at least one cell migration message related to a second pod with which the first pod is to perform cell migration; and based on the cell migration being terminated, receive a cell migration termination message from the first pod.

In accordance with an aspect of the disclosure, an electronic device for controlling scaling in a virtual radio access network includes a memory configured to store one or more instructions: a transceiver; and at least one processor configured to execute the one or more instructions to: determine a cell migration situation based on information about a key performance indicator (KPI) of a first pod obtained using the transceiver, based on the cell migration situation, transmit, to the first pod, at least one cell migration message related to a second pod with which the first pod is to perform cell migration, and based on the cell migration being terminated, receive a cell migration termination message from the first pod using the transceiver.

The information about the KPI may include information about at least one of a number of user equipments (UEs) processed by a pod, the number of cells processed by the pod, a central processing unit (CPU) utilization, a memory usage, a throughput, a radio network temporary identifier (RNTI), a block error rate (BLER), and a reference signal received power (RSRP).

Each of the first pod and the second pod may include one of a centralized unit (CU) or a distributed unit (DU).

The at least one processor may be further configured to execute the one or more instructions to: based on the obtained KPI of the first pod being less than or equal to a predetermined first value, determine the cell migration situation to be a scale-in situation, and based on the obtained KPI of the first pod being greater than or equal to a predetermined second value, determine the cell migration situation to be a scale-out situation.

The at least one processor may be further configured to execute the one or more instructions to: based on the cell migration situation being determined to be the scale-out situation, request a management device to generate the second pod, receive a message indicating that the generating of the second pod is completed from the management device using the transceiver, and control the transceiver to transmit the at least one cell migration message to the first pod.

The at least one processor may be further configured to execute the one or more instructions to: based on the cell migration situation being determined to be the scale-in situation, and based on information about a KPI of the second pod, determine that the second pod is to perform the cell migration with the first pod, receive the cell migration termination message from the first pod, control the transceiver to transmit, to the management device, a message requesting deletion of the second pod, and receive a message indicating that the deletion of the second pod is completed from the management device through the transceiver.

The at least one processor may be further configured to execute the one or more instructions to: based on the cell migration situation being determined to be the scale-out situation, and based on a KPI of the second pod being less than or equal to a predetermined second value, control the transceiver to transmit, to the first pod, the at least one cell migration message related to the second pod.

The at least one cell migration message may include at least one of endpoint information corresponding to the first pod, endpoint information corresponding to the second pod, scaling type information, scaling trigger basis information, resource allocation information of the second pod, and a scaling control request identifier (ID).

The cell migration termination message may include at least one of information about a completion status of the cell migration, cell migration failure reason information, KPI information at a time point of completion of the cell migration, and a scaling control request identifier (ID) information.

### [Description of Drawings]

The above and other aspects, features, and advantages of certain embodiments of the present disclosure will be more apparent from the following description taken in conjunction with the accompanying drawings, in which:
FIG. 1 is a block diagram illustrating a configuration of a wireless access network system according to an embodiment of the disclosure.
FIG. 2 is a flowchart illustrating a method, performed by an electronic device, of controlling scaling, according to an embodiment of the disclosure.
FIG. 3 illustrates a method, performed by an electronic device, of controlling scale-out of a radio access network, according to an embodiment of the disclosure.
FIG. 4 is a block diagram illustrating state transitions of an electronic device according to an embodiment of the disclosure.
FIG. 5A and 5B illustrate a process of performing scale-out, according to an embodiment of the disclosure.
FIG. 6 illustrates a method, performed by an electronic device, of controlling scale-in of a radio access network, according to an embodiment of the disclosure.
FIGS. 7A and 7B illustrate a process of performing scale-in, according to an embodiment of the disclosure.
FIG. 8 illustrates a method, performed by an electronic device, of controlling only cell migration of a radio access network, according to an embodiment of the disclosure.
FIG. 9A and 9B illustrate a process of performing only cell migration, according to an embodiment of the disclosure.
FIG. 10 is a block diagram illustrating a configuration of an electronic device according to an embodiment of the disclosure.

### [Mode for Invention]

Hereinafter, embodiments of the disclosure are described in detail with reference to the accompanying drawings. The disclosure may, however, be embodied in many different forms and should not be construed as being limited to the embodiments set forth herein. In addition, similar reference numerals are assigned to similar elements throughout the specification.

Although the terms used in the disclosure are selected from among common terms that are currently widely used in consideration of their function in the disclosure, the terms may be different according to an intention of those of ordinary skill in the art, a precedent, or the advent of new technology. Also, in particular cases, the terms are discretionally selected, in which case, the meaning of those terms are described in detail in the corresponding embodiment of the disclosure. Therefore, the terms used herein are not merely designations of the terms, but the terms are defined based on the meaning of the terms and content throughout the disclosure.

As used herein, the singular expression may also include the plural meaning as long as it is not inconsistent with the context. All the terms used herein, including technical and scientific terms, may have the same meanings as those generally understood by those of skill in the art.

Also, the terms used herein, such as "...er (or)", "... unit", "... module", etc., may denote a unit that performs at least one function or operation, which may be implemented as hardware or software or a combination thereof.

Herein, when a part is referred to as being "connected to" another part, this may mean that the part is "directly connected to" or "physically connected to" the other part, or is "electrically connected to" the other part through an intervening element. In the disclosure, the terms "transmit", "receive", and "communicate", as well as derivatives thereof, encompass both direct and indirect communication. In addition, when a part is referred to as "including" or "comprising" a component, this may mean that the part may additionally include or comprise other components rather than excluding other components as long as there is no particular opposing recitation.

Throughout the disclosure, the expression "or" is inclusive and not exclusive, as long as there is no particular opposing recitation. Thus, the expression "A or B" may refer to "A, B, or both" as long as it is not inconsistent with the context. In the disclosure, the phrase "at least one of", when used with a list of items, means that different combinations of one or more of the listed items may be used, and only one item in the list may be needed. For example, "at least one of: A, B, or C" may include any of the following combinations: A, B, C, A and B, A and C, B and C, or A and B and C.

The term "controller" may refer to any device, system or part thereof that controls at least one operation. Such a controller may be implemented in hardware, a combination of hardware and software, or firmware. The functionality associated with any particular controller may be centralized or distributed, whether locally or remotely.

Various embodiments of the disclosure described below may be implemented or supported by one or more computer programs, which may be produced from computer-readable program code and stored in a computer-readable medium. In the disclosure, the terms "application" and "program" may refer to one or more computer programs, software components, instruction sets, procedures, functions, objects, classes, instances, relevant data, which are suitable for an implementation in computer-readable program code, or a part thereof. The term "computer-readable program code" may include various types of computer code including source code, object code, and executable code. The term "computer-readable medium" may include various types of media that is accessible by a computer, such as read-only memory (ROM), random-access memory (RAM), a hard disk drive (HDD), a compact disc (CD), a digital video disc (DVD), or various types of memory.

In addition, the computer-readable storage medium may be provided in the form of a non-transitory storage medium. Here, the term 'non-transitory storage medium' may refer to a tangible device, and may exclude wired, wireless, optical, or other communication links that transmit temporary electrical or other signals. In addition, the term 'non-transitory storage medium' does not distinguish between a case in which data is stored in a storage medium semi-permanently and a case in which data is stored temporarily. For example, the non-transitory storage medium may include a buffer in which data is temporarily stored. The computer-readable medium may be any available medium that is accessible by a computer, and may include a volatile or non-volatile medium and a removable or non-removable medium. The computer-readable media includes media in which data may be permanently stored and media in which data may be stored and overwritten later, such as a rewritable optical disc or an erasable memory device.

According to an embodiment of the disclosure, methods according to various embodiments of the disclosure may be included in a computer program product and then provided. The computer program products may be traded as commodities between sellers and buyers. The computer program product may be distributed in the form of a machine-readable storage medium (e.g., a CD-ROM), or be distributed (e.g., downloaded or uploaded) online through an application store (e.g., PlayStore^{™}), or between two user devices (e.g., smart phones) directly. In a case of online distribution, at least a portion of the computer program product (e.g., a downloadable app) may be temporarily stored in a machine-readable storage medium such as a manufacturer's server, an application store's server, or a memory of a relay server.

Definitions of other particular words and phrases may be provided throughout the disclosure. Those of skill in the art should understand that in many, if not most instances, such definitions apply to prior as well as future uses of such defined words and phrases.

Herein, each component described hereinafter may additionally perform some or all of functions performed by another component, in addition to main functions of itself, and some of the main functions of each component may be performed entirely by another component.

Herein, the term 'scaling' may refer to an operation of adjusting the number of pods by deleting or generating pods according to a predefined criterion. In addition, the term 'scaling' may be used as a general term for a scale-in operation and a scale-out operation to be described below.

Herein, the term 'scale-in' may refer to an operation of adjusting the number of pods by deleting pods according to a predefined criterion. For example, the scale-in operation may reduce the number of pods that are no longer required or used, thereby reducing the resources which are used or required.

Herein, the term 'scale-out' may refer to an operation of adjusting the number of pods by generating pods according to a predefined criterion. For example, the term 'scale-out' can refer to adding, when a pod capacity or performance limit is reached, pods with similar specifications to share the load of existing pods, thereby improving overall performance.

Herein, the term 'cell migration' may refer to an operation of migrating a cell being processed by a particular pod to another pod. In addition, the term 'migration' may be used in the same meaning as the term 'cell migration' in the specification.

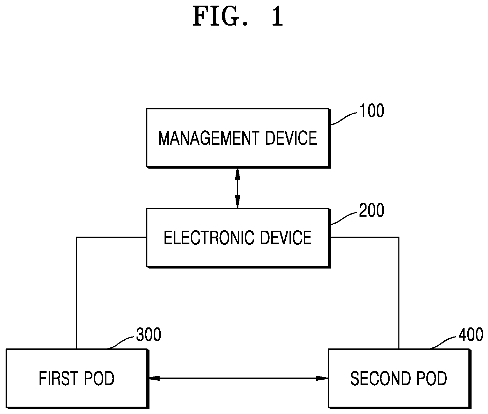

FIG. 1 is a block diagram illustrating a configuration of a virtual radio access network (vRAN) system according to an embodiment of the disclosure. In embodiments, the vRAN may be, or may be included in, a wireless access network.

Referring to FIG. 1, a vRAN system according to an embodiment of the disclosure may include a management device 100, an electronic device 200, a first pod 300, and a second pod 400. However, the devices included in the RAN system are not limited thereto.

The management device 100 may include Kubernetes. Kubernetes may refer to a container management system for rapidly and automatically deploying cloudified applications and providing container orchestration, scaling, and the like. Here, the term 'orchestration' may refer to managing and adjusting computing resources by automating the configuration of computer systems, services, and applications, and the term 'container orchestration' may refer to automating the deployment, management, and expansion of containers.

Because pods of a vRAN may differ in the number of cells or terminals to be processed, and the resources used by the pods may be flexible according to time or period, control of scaling between the pods of the vRAN may be beneficial.

Kubernetes provides a horizontal pod autoscaler (HPA) feature to scale pods. An HPA may perform scaling by monitoring key performance indicators (KPIs) of pods according to a preset KPI value and generating or deleting pods when the preset KPI value is reached. In a scaling method performed by the HPA, pods may be generated or deleted according to the number of pods set in a replicaset.

Here, the replicaset may refer to a set that is managed such that a specified number of pods always run for managing resources while guaranteeing the availability of the number of running pods.

For example, based on a preset number of pods in the replicaset being 10, the HPA may control such that, when one pod is deleted during a scaling operation, another pod is generated such that the number of pods is always maintained at 10.

The HPA of Kubernetes may monitor limited KPI types, including central processing unit (CPU) occupancy and memory usage. In addition, the HPA may not directly designate a pod to be generated or deleted when performing scaling, and a user may not know which pod is generated or deleted. Accordingly, when the HPA performs an operation of deleting a pod, the pod to be deleted may be forcibly deleted even though the software of the pod is not ready for the deletion.

Therefore, scaling by the HPA may cause session loss, because a pod may be deleted before cell migration between pods is performed.

According to embodiments, building a scalable structure that allows pods to transmit and receive cell migration therebetween, may include determining which pods are to be scaled in or out, and which information is to be transmitted and received. Building a structure that allows all pods to directly share resource information therebetween in order to build a scalable structure between the pods may consume a lot of resources.

In embodiments, pods on a vRAN may have a structure in which resource usage information is directly shared among the pods. In embodiments, pods on a vRAN may have a structure in which resource usage information is transmitted to an upper layer that serves as a manager, such as the management device 100 or the electronic device 200.

The electronic device 200 may use KPI information of the first pod 300 to determine a preset or predetermined scaling situation. In embodiments, "information of" an element may refer to, for example, at least one of "information about" the element, "information associated with" the element, "information related to" the element, and "information corresponding to" the element. In addition, the electronic device 200 may request the management device 100 to generate a new pod or delete an existing pod according to the determined scaling situation.

Based on the electronic device 200 performing a scaling operation, the electronic device 200 may transmit at least one cell migration message to prevent session loss, and receive a cell migration termination message after cell migration is terminated.

Therefore, the electronic device 200 may delete a pod after cell migration between pods is completed, thereby achieving various effects including an effect of preventing session loss.

The first pod 300 and the second pod 400 may be processing modules existing in a vRAN, and for example may refer to units that serve as a base station in a 5th Generation (5G) network.

For example, according to an embodiment of the disclosure, the first pod 300 and the second pod 400 may be any one of a centralized unit (CU) or a distributed unit (DU).

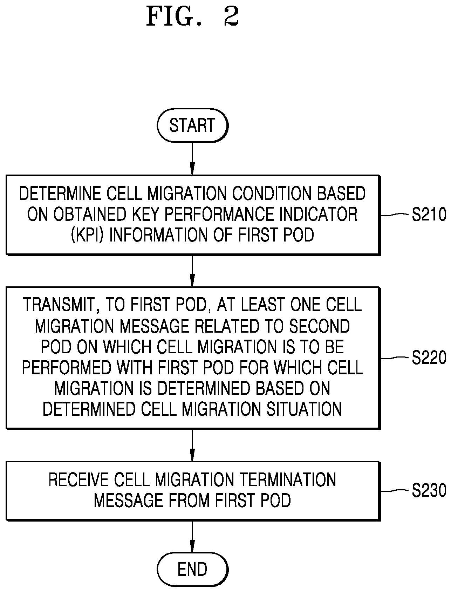

An example of a method, performed by an electronic device 200, of determining a scaling situation and transmitting and receiving message related to cell migration to and from the management device 100, the first pod 300, and the second pod 400 is described in detail below with reference to FIGS. 2 to 5.

FIG. 2 is a flowchart illustrating a method, performed by an electronic device, of controlling scaling, according to an embodiment of the disclosure.

Referring to FIGS. 1 and 2, the electronic device 200 may determine a cell migration situation, which may be referred to as a cell migration condition, based on the obtained KPI information of the first pod 300 at operation S210.

Here, the KPI information obtained by the electronic device 200 may include information about at least one of a number of user equipments (UEs) processed by the pod, a number of cells processed by the pod, CPU utilization, memory usage, throughput, radio network temporary identifier (RNTI), block error rate (BLER), or reference signal received power (RSRP).

The CPU utilization and memory usage of the pod may refer to information detected by the HPA of Kubernetes, and may indicate the amount of additional computation which the pod is capable of performing.

The RNTI may refer to information used to identify a terminal connected to a cell, a particular radio channel, a terminal group in a case of paging, a terminal group for which power control is issued by a base station, and system information transmitted from a 5G base station to all terminals.

The BLER may refer to a ratio of the number of erroneous blocks among received blocks to the total number of transmitted blocks. The BLER may be used to measure the performance of a physical layer.

The RSRP may refer to a value representing the received signal sensitivity, and may be in units of decibel-milliwatts (dBm).

The electronic device 200 may determine the cell migration situation by using the obtained KPI information of the first pod 300, according to a cell migration rule.

The cell migration rule may refer to a rule for determining a cell migration situation according to a preset threshold KPI value. The threshold KPI value used in the cell migration rule may be a value that is set according to an input by a user, or may be a value determined considering resource situations of pods or timing.

For example, a threshold KPI value for a first time period during which a large amount of resources of pods are used, and a threshold KPI value of a second time period during which a small amount of resources of pods are used may be determined to be different values.

In addition, the cell migration rule may relate to various pieces of setting information used for cell migration. Table 1 below shows pieces of setting information of the cell migration rule according to an embodiment of the disclosure.

**[Table 1]**

| |
|---|
| MinResource: |
| CellNum: **1** |
| CpuLoad: **20** |
| Throughput: 102244 # Example: PHY <-> MAC UL/DL byte size |
| NumUePerCELL: **1** |
| NumUePerDU: **1** |
| |
| MaxResource: |
| CellNum: **2** |
| CpuLoad: **80** |
| Throughput: 1048576 # Example: PHY <-> MAC UL/DL byte size |
| NumUePerCELL: **4** |
| NumUePerDU: 8 |
| |
| Policy: |
| Monitoring Period - 200 # (ms) Period for collecting information about scaling KPI (resource item) |
| ScalingPeriod: 300 # (sec) Period time to determine whether to perform scaling operation (once every 300 seconds), immediately if 0 |
| MetricStandard: "avg" # "avg", "min", or "max". Determine which metric information collected during set time period will be used |
| TargetScalingPodLabel: "vdu" # Target pod to which rule will be applied (k8s label) |
| MaxPod: 8 # Maximum number of pods for target Namespace |
| MinPod: 1 # Minimum number of pods for target Namespace |
| ScaleOutDisabled: false # Set scale-out operation not to be triggered (default: false) |
| ScaleInDisabled: false # Set scale-in operation not to be triggered (default: false) |
| OnlyMigrationDisable: false # Set only-migration operation not to be triggered (default: false) |
| NodeSelect: # Setting to specify node where pods are generated in scale-out operation |
| Type: "label" # Supports three types: default, node, and label |
| Name: "DPP Group1" # Used only for node and label, and refers to Name of node or label |
| DataFilter: "DU" # Set KPI monitoring target vRAN ID (vDU ID / vCU ID) for determining whether to perform scaling |
| MigrationRange: # Determine whether to perform only migration with existing pod without generating or deleting pods |
| MinUsage: 20 # Criteria for selecting migration targets among existing pods |
| Range: "Cell" # Range when performing migration (Cell, UE) |

The electronic device according to an embodiment of the disclosure may determine the cell migration situation by using a plurality of pieces of KPI information collected for a preset time period. For example, based on MonitoringPeriod being 1 second and ScalingPeriod being 5 seconds, five pieces of KPI information may be obtained for 5 seconds. In this case, the electronic device 200 may determine the cell migration situation by using the five pieces of KPI information.

MetricStandard may be used to determine which value may be used as a representative value by using a plurality of pieces of collected KPI information. MetricStandard may be set to any one of a minimum (min), an average (avg), and a maximum (max). For example, based on MetricStandard being set to min, the electronic device 200 may determine the cell migration situation by determining, as the representative value, the largest value among the plurality of pieces of collected KPI information and comparing the determined representative value with a threshold KPI value.

The cell migration situation may be any one of a scale-in situation in which scale-in may be performed or may be required between pods, a scale-out situation which scale-out may be performed or may be required between pods, and a migration-only situation in which only cell migration may be performed or may be required between pods. In all of a scale-in situation, a scale-out situation, and a migration-only situation, cell migration between pods may be performed.

Based on the cell migration situation being determined as a scale-in situation or a scale-out situation, a scaling operation by the management device 100 and a cell migration operation between the pods may be performed simultaneously or sequentially.

Based on the cell migration situation being determined as the migration-only situation, no pods may be generated or deleted by the management device. Accordingly, by performing cell migration between already existing pods, the phenomenon of concentrating necessary resources on one side may be alleviated.

The electronic device 200 may transmit, to a first pod, at least one cell migration message related to a second pod on which cell migration is to be performed with the first pod for which the cell migration is determined, based on the determined cell migration situation at operation S220.

The cell migration message may include information about at least one of endpoint information of the first pod 300, endpoint information of the second pod 400, the cell migration situation, basis information of the cell migration situation, resource allocation information of the second pod 400, a scaling control request identifier (ID), or information about a cell to be migrated from the first pod 300 to the second pod 400 when performing the cell migration.

Here, the basis information of the cell migration situation may include at least one of the number of cells of the first pod 300, the number of terminals connected to the first pod 300, a throughput of the first pod 300, CPU utilization, memory usage, RNTI radio network temporary identifier, BLER, or RSRP.

In addition, the electronic device 200 may receive a cell migration termination message from the first pod 300 at operation S230. Based on the electronic device 200 determining that the cell migration situation is a scale-in situation, after receiving the cell migration termination message, the electronic device 200 may transmit, to the management device 100, a request message to delete the second pod 400, such that the second pod 400 is deleted after the cell migration between the first pod 300 and the second pod 400 is completed.

The cell migration termination message may include at least one of information about whether the cell migration is completed, cell migration failure reason information, KPI information at a time point of completion of the cell migration, or the scaling control request ID.

The electronic device 200 may determine the cell migration situation by using a KPI of a monitored pod, and transmit a cell migration message to the pod such that the pod is not deleted until cell migration between pods is completed, thereby preventing session loss.

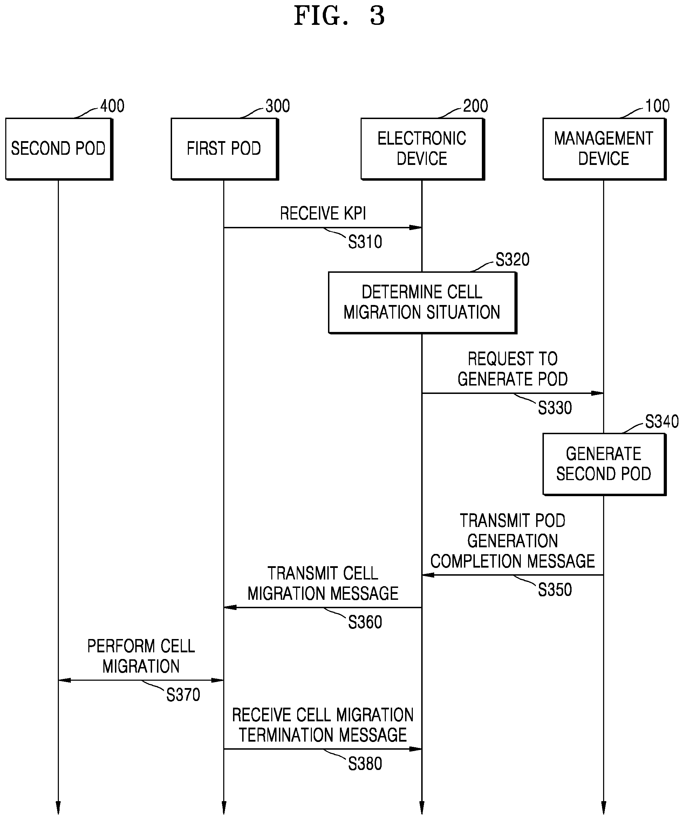

Hereinafter, an example of an operation, performed by the electronic device 200, of determining a cell migration situation, and an operation of each device for each determined cell migration situation is described in detail with reference to FIGS. 3 to 8.

FIG. 3 illustrates a method, performed by an electronic device, of controlling scale-out of a RAN, according to an embodiment of the disclosure.

Referring to FIG. 3, the electronic device 200 may receive KPI information of the first pod 300 at operation S310. Although the electronic device 200 is described as directly monitoring the KPI of the first pod 300, embodiments are not limited thereto. For example, in embodiments the monitoring of the KPI of the first pod 300 may be performed by a device separate from the electronic device 200. In this case, the electronic device 200 may receive the KPI of the monitored first pod 300 from the separate device.

The electronic device 200 may determine a cell migration situation by using the KPI of the first pod 300 at operation S320. The cell migration situation may be determined by a cell migration rule. Based on the KPI of the first pod 300 obtained by the cell migration rule being greater than or equal to a preset threshold KPI, the electronic device 200 may determine that the cell migration situation is a scale-out situation.

Based on the cell migration situation being determined as a scale-out situation, the electronic device 200 may request the management device 100 to generate a new pod at operation S330. Here, the management device 100 may include Kubernetes, and may generate the second pod 400 to which a cell may be migrated within a range defined by a user by using an application programming interface (API) server provided by the management device 100 at operation S340.

When the second pod 400 is generated by the management device 100, the electronic device 200 may receive, from the management device 100, a message indicating that the second pod 400 has been generated at operation S350. For example, after the second pod 400 to which the cell is to be migrated is generated, the electronic device 200 may transmit, to the first pod 300, a cell migration message at operation S360.

Here, the cell migration message may include information used for the cell migration between the first pod 300 and the second pod 400. For example, the cell migration message may include information about at least one of endpoint information of the first pod 300, endpoint information of the second pod 400, the cell migration situation, basis information of the cell migration situation, resource allocation information of the second pod 400, a scaling control request ID, or information about a cell to be migrated from the first pod 300 to the second pod 400 when performing the cell migration.

After the cell migration message is transmitted to the first pod 300, a cell migration operation may be performed between the first pod 300 and the second pod 400 at operation S370, and when the cell migration operation is completed, the electronic device 200 may receive a cell migration termination message at operation S380.

Here, the cell migration termination message may include information related to the cell migration situation. For example, the cell migration termination message may include at least one of information about whether the cell migration is completed, cell migration failure reason information, KPI information at a time point of completion of the cell migration, or the scaling control request ID.

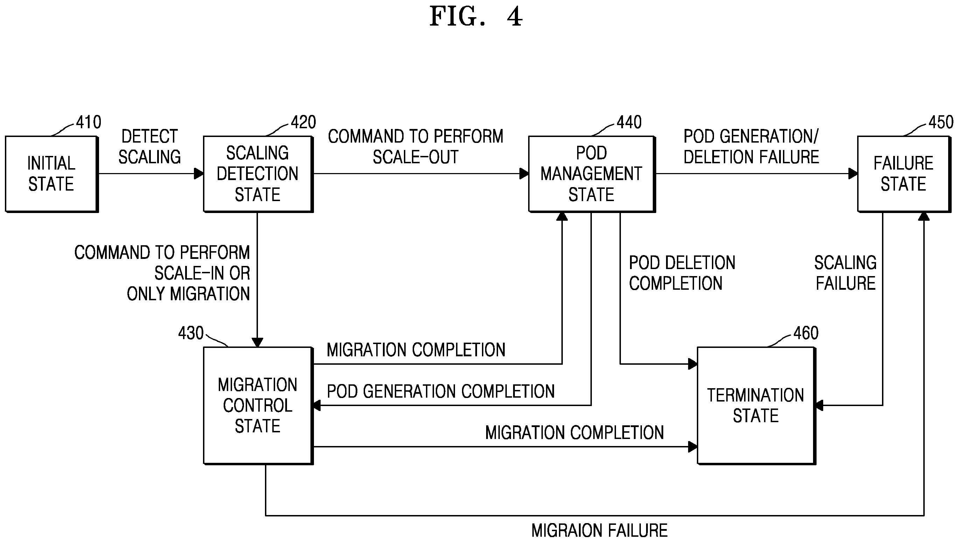

FIG. 4 is a block diagram illustrating state transitions of an electronic device according to an embodiment of the disclosure.

Referring to FIGS. 2 and 4, states of the electronic device 200 may include an initial state 410, a scaling detection state 420, a migration control state 430, a pod management state 440, a failure state 450, and a termination state 460.

First, the state of the electronic device 200 may transition from the initial state 410 to the scaling detection state 420 for obtaining a KPI of a particular pod and determining whether to perform cell migration, according to a cell migration rule.

In the scaling detection state 420, a cell migration situation may be determined based on the KPI of the particular pod and a preset threshold KPI. Here, the cell migration situation may be any one of a scale-in situation, a scale-out situation, and a migration-only situation.

The electronic device 200 may issue an additional command according to the cell migration situation determined in the scaling detection state 420. Here, the additional command may include one of a command to perform scale-in, a command to perform scale-out, and a command to perform only migration.

The state of the electronic device 200 may transition to the migration control state 430 based on the additional command being a command to perform scale-in or a command to perform only cell migration, and to the migration control state 430 based on the add command being a command to perform scale-out.

In the migration control state 430, the electronic device 200 may transmit a cell migration message to the first pod 300, which is to perform the cell migration, and receive, from the first pod 300, information about migration completion or migration failure.

For example, based on a scale-in completion message being received from the first pod 300, the electronic device 200 in the migration control state 430 may transmit a cell migration termination message to the management device 100, and the state of the electronic device 200 may transition to the pod management state 440.

In an embodiment of the disclosure, based on the electronic device 200 receiving a migration failure message from the first pod 300, the state of the electronic device may transition from the migration control state 430 to the failure state 450. For example, in the migration control state 430, the electronic device 200 may control a migration state by transmitting or receiving a message related to the cell migration between the pods.

Based on the electronic device 200 in the scaling detection state 420 determining to perform scale-out, the electronic device 200 may transmit, to the management device 100, a command to perform scale-out as the additional command, and transition to the pod management state 440. Here, the scaling detection state 420 in which it is determined to perform scale-out may correspond to the state of the electronic device 200 in operation S320 of FIG. 3.

In the pod management state 440, the electronic device 200 may generate or delete a pod with the management device 100, and transmit or receive a pod generation/deletion completion/failure message.

For example, based on determining to perform scale-out, the electronic device 200 in the pod management state 440 may receive, from the management device 100, a message indicating completion of generation of the second pod 400, transmit a cell migration-related message to the first pod 300, and transition to the migration control state 430. In operations S340 to S360 of FIG. 3, the state of the electronic device 200 may correspond to the pod management state 440. Based on determining to perform scale-out or to perform only migration, the electronic device 200 in the migration control state 430 may receive a migration termination message from the first pod 300, and transition to the termination state 460. The state of the electronic device 200 after operation S380 of FIG. 3 may correspond to the termination state 460.

In addition, based on the electronic device 200 determining to perform scale-out and receives a pod generation failure message from the management device 100, the state of the electronic device 200 may transition from the pod management state 440 to the failure state 450.

The failure state 450 may be a state to which the electronic device 200 transitions based on a pod being not generated or deleted by the management device 100 or a cell migration failure message is received from the first pod 300.

Because the cell migration is impossible in the failure state 450 as generation or deletion of a pod or the cell migration has failed, the state of the electronic device 200 may immediately transition the termination state 460.

Based on all scaling or migration operations being completed, the electronic device 200 may transition to the termination state 460.

The termination state 460 of the electronic device 200 may refer to a state in which the cell migration situation determined in the scaling detection state 420 has completely terminated. Accordingly, in the termination state 460, the electronic device 200 may transition to the initial state 410 for receiving a KPI from at least one pod and detecting a scaling situation.

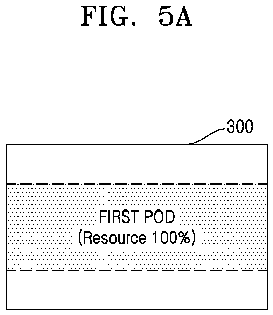

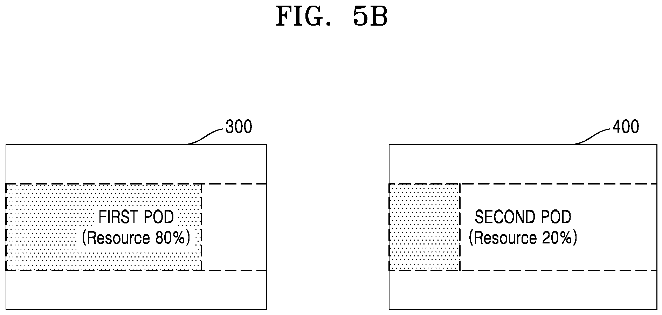

FIG. 5A and 5B illustrate a process of performing scale-out according to an embodiment of the disclosure.

Referring to FIGS. 3 and 5A, based on 100 % of the resources of the first pod 300 being used, the electronic device 200 may obtain resource information of the first pod 300 as KPI information, and determine the cell migration situation according to the cell migration rule. For example, based on the cell migration rule indicating that scale-out is performed when a resource usage rate of 90 % or greater, which may be a threshold KPI, being satisfied, the electronic device 200 may determine that the cell migration situation is a scale-out situation.

The electronic device 200 may request the management device 100 to generate the second pod 400 for scale-out, and the management device 100 may generate the second pod 400. The resource usage rate of the second pod 400 may be 0 % when initially generated.

Referring to FIGS. 4 and 5B, the electronic device 200 may transmit a cell migration message to the first pod 300, and cell migration between the first pod 300 and the second pod 400 may be completed. The first pod 300 may migrate a cell to the second pod 400 by using the cell migration message received from the electronic device 200, and transmit a cell migration termination message to the electronic device 200.

When the cell migration is completed, the resource usage rate of the first pod 300 may be 80 %, the resource usage rate of the second pod 400 may be 20 %, and the electronic device 200 may store, by using the cell migration termination message, the resource usage rates of the first pod 300 and the second pod 400 at a time point at which the cell migration is completed.

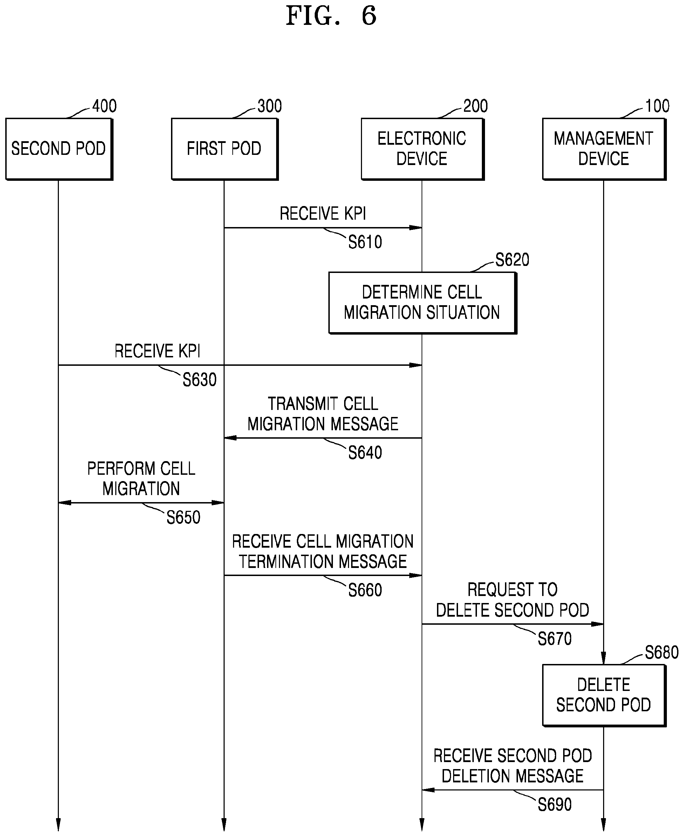

FIG. 6 illustrates a method, performed by an electronic device, of controlling scale-in of a RAN, according to an embodiment of the disclosure.

Referring to FIG. 6, the electronic device 200 may receive KPI information of the first pod 300 at operation S610. Although the electronic device 200 is described as directly monitoring a KPI of the first pod 300 or the second pod 400 , embodiments are not limited thereto. For example, in embodiments the monitoring of the KPI of the first pod 300 or the second pod 400 may be performed by a device separate from the electronic device 200. In this case, the electronic device 200 may receive the KPI of the monitored first pod 300 or second pod 400, from the separate device.

The electronic device 200 may determine a cell migration situation by using the KPI of the first pod 300 at operation S620. Here, the state of the electronic device 200 may be the scaling detection state 420 of FIG. 4 to determine the cell migration situation.

The cell migration situation may be determined by a cell migration rule. Based on the KPI of the first pod 300 obtained by the cell migration rule being less than or equal to a preset threshold KPI, the electronic device 200 may determine that the cell migration situation is a scale-in situation. For example, based on the cell migration rule indicating that scale-in is performed when a resource usage rate of 60 % or less, which may be a threshold KPI, being satisfied, the electronic device 200 may determine that the cell migration situation is a scale-in situation.

Based on the cell migration situation being determined as a scale-in situation, the electronic device 200 may receive KPI information of the monitored second pod 400 in order to determine a target pod to perform cell migration with the first pod 300 at operation S630, and determine the second pod 400 as the target pod, based on the received KPI information of the second pod 400.

The electronic device 200 may transmit a cell migration message to the first pod 300 at operation S640. For example, the electronic device 200 may first transmit the cell migration message to the first pod 300, such that the cell migration between the first pod 300 and the second pod 400 is performed before the second pod 400 is deleted by the management device 100. When the electronic device 200 transmits the cell migration message, the state of the electronic device 200 may transition from the scaling detection state 420 to the migration control state 430 of FIG. 4.

Here, the cell migration message may include information used for the cell migration between the first pod 300 and the second pod 400. For example, the cell migration message may include information about at least one of endpoint information of the first pod 300, endpoint information of the second pod 400, the cell migration situation, basis information of the cell migration situation, resource allocation information of the second pod 400, a scaling control request ID, or information about a cell to be migrated from the first pod 300 to the second pod 400 when performing the cell migration.

After the cell migration message is transmitted to the first pod 300, a cell migration operation may be performed between the first pod 300 and the second pod 400 at operation S650, and when the cell migration operation is completed, the electronic device 200 may receive a cell migration termination message from the first pod 300 at operation S660. Here, based on the cell migration failing, the state of the electronic device 200 may transition from the migration control state 430 to the failure state 450 of FIG. 4.

Here, the cell migration termination message may include information related to the cell migration situation. For example, the cell migration termination message may include at least one of information about whether the cell migration is completed, cell migration failure reason information, KPI information at a time point of completion of the cell migration, or the scaling control request ID.

After receiving the cell migration termination message, the electronic device 200 may transmit, to the management device 100, a message for requesting deletion of the second pod 400 at operation S670, and the management device 100 may delete the second pod 400 that is no longer needed at operation S680, and transmit, to the electronic device 200, a message indicating the deletion of the second pod 400 at operation S690. Here, the state of the electronic device 200 may transition from the migration control state 430 to the pod management state 440 after transmitting, to the management device 100, the message requesting to delete the second pod 400. In addition, when the deletion of the second pod 400 is completed, the state of the electronic device 200 may transition from the pod management state 440 to the termination state 460 of FIG. 4, and when the deletion of the second pod 400 fails, the state of the electronic device 200 may transition from the pod management state 440 to the failure state 450 of FIG. 4.

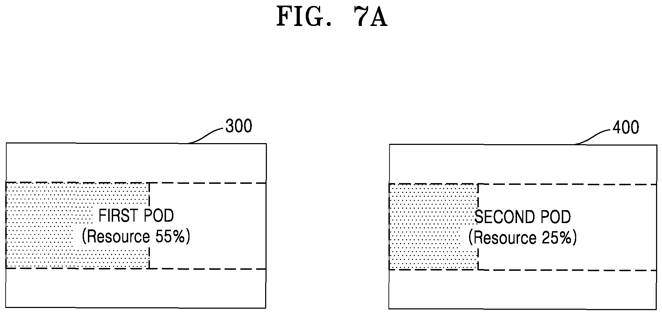

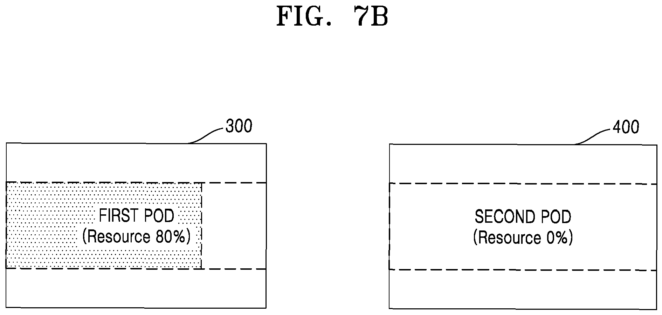

FIGS. 7A and 7B illustrate a process of performing scale-in according to an embodiment of the disclosure.

Referring to FIGS. 6 and 7A, based on 55 % of the resources of the first pod 300 being used, the electronic device 200 may obtain resource information of the first pod 300 as KPI information, and determine the cell migration situation according to the cell migration rule. For example, based on the cell migration rule indicating that scale-in is performed when a resource usage rate of 60 % or less, which may be a threshold KPI, being satisfied, the electronic device 200 may determine that the cell migration situation requires scale-in.

The electronic device 200 may receive a KPI of the second pod 400 monitored for performing scale-in, and determine the second pod 400 as a target pod for cell migration. According to an embodiment of the disclosure, the second pod 400 may be determined as the target pod, as the sum of the resource usage rates of the first pod 300 and the second pod 400 is less than 100 %.

Referring to FIGS. 6 and 7B, the electronic device 200 may transmit a cell migration message to the first pod 300, and cell migration between the first pod 300 and the second pod 400 may be completed. The first pod 300 may migrate a cell to the second pod 400 by using the cell migration message received from the electronic device 200, and transmit a cell migration termination message to the electronic device 200.

When the cell migration is completed, the resource usage rate of the first pod 300 may be 80 %, the resource usage rate of the second pod 400 may be 0 %, and the electronic device 200 may store, by using the obtained cell migration termination message, the resource usage rate of the first pod 300 at a time point at which the cell migration is completed.

Subsequently, the electronic device 200 may request the management device 100 to delete the second pod 400, in which the resource usage rate is 0 %, and the management device 100 may delete the second pod 400.

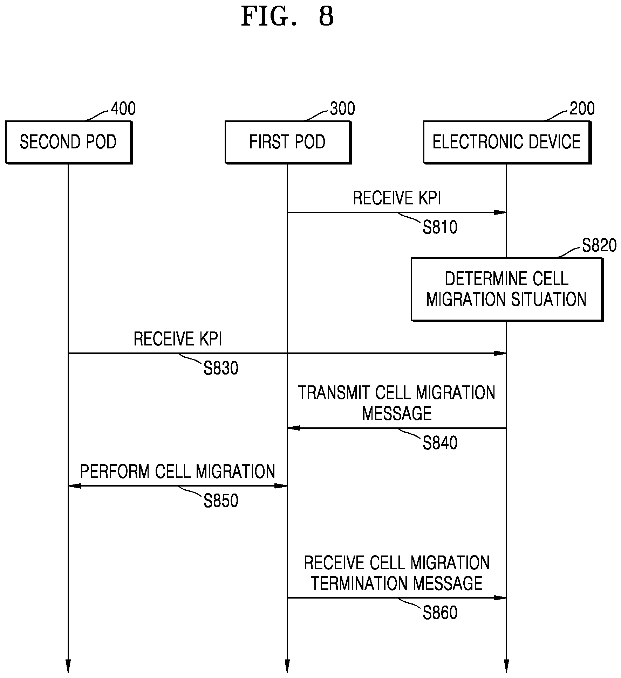

FIG. 8 illustrates a method, performed by an electronic device, of performing only cell migration of a RAN, according to an embodiment of the disclosure.

Referring to FIG. 8, the electronic device 200 according to an embodiment of the disclosure may receive KPI information of the first pod 300 at operation S810. Although the electronic device 200 is described as directly monitoring a KPI of the first pod 300 or the second pod 400, embodiments are not limited thereto. For example, in embodiments the monitoring of the KPI of the first pod 300 or the second pod 400 may be performed by a device separate from the electronic device 200. In this case, the electronic device 200 may receive the KPI of the monitored first pod 300 or second pod 400, from the separate device.

The electronic device 200 may determine a cell migration situation by using the KPI of the first pod 300 at operation S820. The cell migration situation may be determined by a cell migration rule. Based on the KPI of the first pod 300 obtained by the cell migration rule being greater than or equal to a preset threshold KPI, the electronic device 200 may determine that the cell migration situation is a scale-out situation. For example, based on the cell migration rule indicating that scale-out is performed when a resource usage rate of 90 % or greater, which may be a threshold KPI, being satisfied, the electronic device 200 may determine that the cell migration situation is a scale-out situation.

Even based on the electronic device 200 determining the cell migration situation as a scale-out situation, the resource usage rate of the first pod 300 may be reduced by performing only cell migration to a pod having a low KPI value among existing pods, without generating a new pod.

The electronic device 200 may receive KPI information of the second pod 400 at operation S830, and based on the received KPI of the second pod 400 being less than or equal to a preset third value, the electronic device 200 may determine to perform only data migration.

Based on the electronic device 200 determining to perform only data migration, the electronic device 200 may transmit a cell migration message to the first pod 300 at operation S840. Here, the state of the electronic device 200 may transition from the scaling detection state 420 to the migration control state 430 of FIG. 4.

Here, the cell migration message may include information used for the cell migration between the first pod 300 and the second pod 400. For example, the cell migration message may include information about at least one of endpoint information of the first pod 300, endpoint information of the second pod 400, the cell migration situation, basis information of the cell migration situation, resource allocation information of the second pod 400, a scaling control request ID, or information about a cell to be migrated from the first pod 300 to the second pod 400 when performing the cell migration.

After the cell migration message is transmitted to the first pod 300, a cell migration operation may be performed between the first pod 300 and the second pod 400 at operation S850, and when the cell migration operation is completed, the electronic device 200 may receive a cell migration termination message from the first pod 300 at operation S860. When the electronic device 200 receives the cell migration termination message, the state of the electronic device 200 may transition from the migration control state 430 to the termination state 460 of FIG. 4, and when the electronic device 200 receives a cell migration failure message, the state of the electronic device 200 may transition from the migration control state 430 to the failure state 450 of FIG. 4.

Here, the cell migration termination message may include information related to the cell migration situation. For example, the cell migration termination message may include at least one of information about whether the cell migration is completed, cell migration failure reason information, KPI information at a time point of completion of the cell migration, or the scaling control request ID.

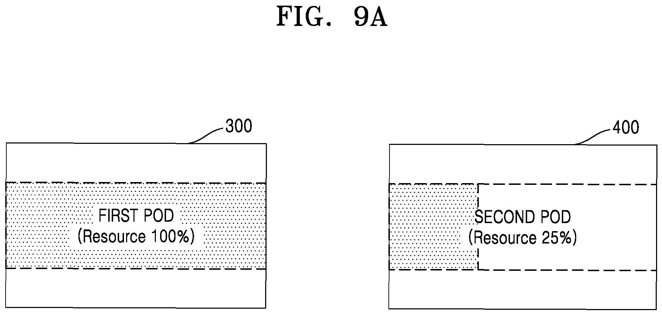

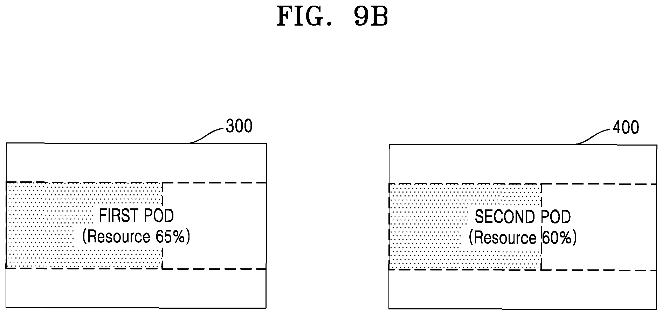

FIG. 9A and 9B illustrate a process performing only cell migration according to an embodiment of the disclosure.

Referring to FIGS. 8 and 9A, based on 100 % of the resources of the first pod 300 being used, the electronic device 200 may obtain resource information of the first pod 300 as KPI information, and determine the cell migration situation according to the cell migration rule. For example, based on the cell migration rule indicating that scale-out is performed when a resource usage rate of 80 % or greater, which may be a threshold KPI, being satisfied, the electronic device 200 may determine that the cell migration situation is a scale-out situation.

Even based on the electronic device 200 determines the cell migration situation as requiring scale-out, the resource usage rate of the first pod 300 may be reduced by performing only cell migration to a pod having a low KPI value among existing pods, without generating a new pod.

The electronic device 200 may receive a KPI of the second pod 400 monitored for performing scale-out, and determine the second pod 400 as a target pod for cell migration. According to an embodiment of the disclosure, the second pod 400 may be determined as the target pod, as the sum of the resource usage rates of the first pod 300 and the second pod 400 is less than 150 %.

Referring to FIGS. 8 and 9B, after the electronic device 200 transmits a cell migration message to the first pod 300, the cell migration between the first pod 300 and the second pod 400 may be completed. The first pod 300 may migrate a cell to the second pod 400 by using the cell migration message received from the electronic device 200, and transmit a cell migration termination message to the electronic device 200.

When the cell migration is completed, the resource usage rate of the first pod 300 may be 65 %, the resource usage rate of the second pod 400 may be 60 %, and the electronic device 200 may store, by using the obtained cell migration termination message, the resource usage rates of the first pod 300 and the second pod 400 at a time point at which the cell migration is completed.

The electronic device 200 may perform only data migration between the pods, which does not generate a new pod. The electronic device 200 may achieve various effects including an effect of preventing an excessive increase in the resource usage rate of any one pod.

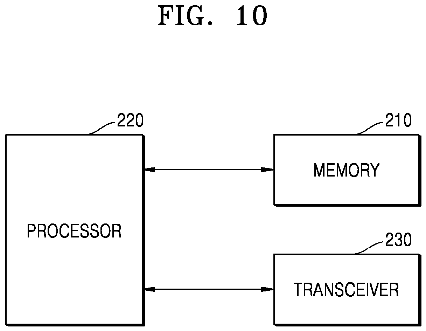

Example methods, which may be performed by the electronic device 200, of performing cell migration are described above. Hereinafter, an example of the configuration of the electronic device 200 is described in detail with reference to FIG. 10.

FIG. 10 is a block diagram illustrating a configuration of an electronic device according to an embodiment of the disclosure.

Referring to FIG. 10, the electronic device 200 according to an embodiment of the disclosure may include a memory 210, a processor 220, and a transceiver 230. According to various embodiments of the disclosure, the components of the electronic device is not limited to those illustrated in FIG. 10, and may further include components not illustrated in FIG. 10, or may omit some components illustrated in FIG. 10.

For example, although FIG. 10 illustrates that the operation of the processor 220 allows the electronic device 200 to control scaling, the operation of the processor 220 may be implemented and stored as software stored in the memory 210.

In addition, the electronic device 200 may further include an input unit for receiving, from a user, an input of a threshold KPI value for determining a scaling situation, and an output unit for outputting a scaling result.

In addition, the operation of the processor 220 may be implemented as a software module stored in the memory 210. For example, the software module may be stored in the memory 210 and operated by being executed by the processor 220.

The memory 210 may be electrically connected to the processor 220, and may store commands or data related to operations of the components included in the electronic device. According to various embodiments of the disclosure, the memory 210 may store a KPI threshold value for determining a cell migration situation, a cell migration message related to a pod to which a cell is to be migrated, or instructions for the above operations.

According to an embodiment of the disclosure, based on modules that perform functions of the electronic device 200 being implemented as software executable by the processor 220, the memory 210 may store instructions for executing such software modules.

The processor 220 may be electrically connected to the components included in the electronic device to perform computations or data processing for control and/or communications of the components included in the electronic device. According to an embodiment of the disclosure, the processor 220 may load, into the memory 210, a command or data received from at least one of other components, process the command or data, and store resulting data in the memory 210.

In addition, although FIG. 10 illustrates that the processor 220 operates as one processor 220 for convenience of description, functions of at least some modules included in the respective units that perform conceptually classified functions of the electronic device may be implemented as a plurality of processors. In this case, the processor 220 does not operate as one processor 220, but a plurality of processors may be implemented as separate hardware units to perform respective operations. However, the disclosure is not limited thereto.

The transceiver 230 may support establishment of a wired or wireless communication channel between the electronic device and another external electronic device, and communication through the established communication channel. According to an embodiment of the disclosure, the transceiver 230 may receive data from another external electronic device or transmit data to another electronic device including a server that controls another external base station, through wired or wireless communication.

Data received by the transceiver 230 according to an embodiment of the disclosure may be a KPI related to at least one pod, at least one cell migration message, and a cell migration termination message.

The cell migration message may include information used for cell migration between the first pod 300 and the second pod 400. For example, the cell migration message may include information about at least one of endpoint information of the first pod 300, endpoint information of the second pod 400, the cell migration situation, basis information of the cell migration situation, resource allocation information of the second pod 400, a scaling control request ID, or information about a cell to be migrated from the first pod 300 to the second pod 400 when performing the cell migration.

The cell migration termination message may include information related to a cell migration situation. For example, the cell migration termination message may include at least one of information about whether the cell migration is completed, cell migration failure reason information, KPI information at a time point of completion of the cell migration, or the scaling control request ID.

According to embodiments of the disclosure, the transceiver 230 may include a wireless communication module (e.g., a cellular communication module, a short-range wireless communication module, or a global navigation satellite system (GNSS) communication module) or a wired communication module (e.g., a local area network (LAN) communication module, or a power line communication module), and may communicate with an external electronic device through a short-range communication network (e.g., Bluetooth, Wi-Fi direct, or Infrared Data Association (IrDA)) or a long-range communication network (e.g., a cellular network, the Internet, or a computer network (e.g., a LAN or a wide area network (WAN))), by using the communication module.

A method of controlling scaling in a vRAN according to an embodiment of the disclosure may include determining a cell migration situation based on KPI information of a first pod, transmitting, to the first pod, at least one cell migration message related to a second pod on which cell migration is to be performed with the first pod for which the cell migration is determined based on the determined cell migration situation, and receiving a cell migration termination message from the first pod.

The KPI information may include information about at least one of the number of UEs processed by the pod, the number of cells processed by the pod, CPU utilization, memory usage, throughput, RNTI, BLER, or RSRP.

Each of the first pod and the second pod may be any one of a CU or a DU.

The determining of the cell migration situation may include, based on the obtained KPI of the first pod being less than or equal to a preset first value, determining the cell migration situation as requiring scale-in, and based on the obtained KPI of the first pod being greater than or equal to a preset second value, determining the cell migration situation as requiring scale-out.

The transmitting of the at least one cell migration message may include, based on the cell migration situation being determined as a scale-in situation, requesting a management device to generate the second pod, receiving, from the management device, a message indicating completion of generation of the second pod, and transmitting the at least one cell migration message to the first pod.

The cell migration message may include at least one of endpoint information of the first pod, endpoint information of the second pod, the determined cell migration situation, basis information of the cell migration situation, resource allocation information of the second pod, or a scaling control request ID.

The cell migration termination message may include at least one of information about whether the cell migration is completed, cell migration failure reason information, KPI information at a time point of completion of the cell migration, or the scaling control request ID.

An electronic device for controlling scaling according to an embodiment of the disclosure may include a transceiver and at least one processor configured to execute one or more instructions stored in the electronic device. When the instructions are executed, the at least one processor may determine a cell migration situation based on KPI information of a first pod obtained through the transceiver. When the instructions are executed, the at least one processor may transmit, to a first pod, at least one cell migration message related to a second pod on which cell migration is to be performed with the first pod for which the cell migration is determined based on the determined cell migration situation. When the instructions are executed, the at least one processor may receive a cell migration termination message from the first pod.

The KPI information may include information about at least one of the number of UEs processed by the pod, the number of cells processed by the pod, CPU utilization, memory usage, throughput, RNTI, BLER, or RSRP.

Each of the first pod and the second pod may be any one of a CU or a DU.

When the instructions are executed, based on the obtained KPI of the first pod being less than or equal to a preset first value, the at least one processor may determine the cell migration situation as requiring scale-in. When the instructions are executed, based on the obtained KPI of the first pod being greater than or equal to the first value, the at least one processor may determine the cell migration situation as requiring scale-out.

When the instructions are executed, based on the cell migration situation being determined as a scale-out situation, the at least one processor may request a management device to generate the second pod. When the instructions are executed, the at least one processor may obtain a message indicating completion of generation of the second pod, from the management device through the transceiver. When the instructions are executed, the at least one processor may control the transceiver to transmit the at least one cell migration message to the first pod.

When the instructions are executed, based on the cell migration situation being determined as a scale-in situation, the at least one processor may determine, based on obtained KPI information of the second pod, that the second pod is to perform cell migration with the first pod. When the instructions are executed, the at least one processor may control the transceiver to receive, from the first pod, a cell migration termination message and transmit, to a management device, a message for requesting deletion of the second pod, and receive, from the management device, a message indicating completion of deletion of the second pod.

When the instructions are executed, based on the cell migration situation being determined as a scale-out situation, and an obtained KPI of the second pod being less than or equal to a preset second value, the at least one processor may control the transceiver to transmit, to the first pod, at least one cell migration message related to the second pod.

The cell migration message may include at least one of endpoint information of the first pod, endpoint information of the second pod, scaling type information, scaling trigger basis information, resource allocation information of the second pod, or a scaling control request ID.

The cell migration termination message may include at least one of information about whether the cell migration is completed, cell migration failure reason information, KPI information at a time point of completion of the cell migration, or scaling control request ID information.

A computer-readable recording medium may include one or more pieces of program code. An electronic device may execute the one or more pieces of program code to perform a method including determining a cell migration situation based on KPI information of a first pod, transmitting, to the first pod, at least one cell migration message related to a second pod on which cell migration is to be performed with the first pod for which the cell migration is determined based on the determined cell migration situation, and receiving a cell migration termination message from the first pod.

A recording medium may store a program for executing at least one of the methods according to the embodiments of the disclosure.

A machine-readable storage medium may be provided in the form of a non-transitory storage medium. Here, the term 'non-transitory storage medium' may refer to a tangible device and does not include a signal (e.g., an electromagnetic wave), and the term 'non-transitory storage medium' does not distinguish between a case where data is stored in a storage medium semi-permanently and a case where data is stored temporarily. For example, the non-transitory storage medium may include a buffer in which data is temporarily stored.

According to an embodiment of the disclosure, the methods according to various embodiments of the disclosure may be included in a computer program product and then provided. The computer program products may be traded as commodities between sellers and buyers. The computer program product may be distributed in the form of a machine-readable storage medium (e.g., a CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. A method of controlling scaling in a virtualized radio access network (vRAN), the method comprising:
determining a cell migration situation based on information about a key performance indicator (KPI) of a first pod (300);
based on the determined cell migration situation, transmitting, to the first pod (300), at least one cell migration message related to a second pod (400) with which the first pod (300) is to perform cell migration; and
in case that the cell migration is terminated, receiving a cell migration termination message from the first pod (300).

2. The method of claim 1, wherein the information about the KPI comprises information about at least one of a number of user equipments (UEs) processed by a pod, a number of cells processed by the pod, a central processing unit (CPU) utilization, a memory usage, a throughput, a radio network temporary identifier (RNTI), a block error rate (BLER), and a reference signal received power (RSRP).

3. The method of claim 1 or claim 2, wherein each of the first pod (300) and the second pod (400) comprises one of a centralized unit (CU) or a distributed unit (DU).

4. The method of any one of claims 1 to 3, wherein the determining of the cell migration situation comprises, in case that the KPI of the first pod (300) is less than or equal to a predetermined first value, determining the cell migration situation to be a scale-in situation, and in case that the KPI of the first pod (300) is greater than or equal to a predetermined second value, determining the cell migration situation to be a scale-out situation.

5. The method of claim 4, wherein the transmitting of the at least one cell migration message comprises:
in case that the cell migration situation is determined to be the scale-out situation, requesting a management device (100) to generate the second pod (400);
receiving, from the management device (100), a message indicating that the generating of the second pod (400) is completed; and
transmitting the at least one cell migration message to the first pod (300).

6. The method of claim 4, wherein the transmitting of the at least one cell migration message comprises, in case that the cell migration situation is determined to be the scale-in situation, based on information about an obtained KPI of the second pod (400), determining that the second pod (400) is to perform the cell migration with the first pod (300), and
wherein the receiving of the cell migration termination message comprises:
in case that the cell migration situation being determined to be the scale-in situation, receiving the cell migration termination message from the first pod (300);
transmitting, to a management device (100), a message requesting deletion of the second pod (400); and
receiving, from the management device (100), a message indicating that the deletion of the second pod (400) is completed.

7. The method of claim 4, wherein the transmitting of the at least one cell migration message comprises, in case that the cell migration situation is determined to be the scale-out situation, and in case that a KPI of the second pod (400) being less than or equal to a predetermined third value, transmitting, to the first pod (300), the at least one cell migration message related to the second pod.

8. The method of any one of claims 1 to 7, wherein the cell migration message comprises at least one of endpoint information about the first pod (300), endpoint information about the second pod (400), information about the cell migration situation, basis information about the cell migration situation, resource allocation information about the second pod (400), and scaling control request identifier (ID).

9. The method of any one of claims 1 to 7, wherein the cell migration termination message comprises at least one of information about a completion status of the cell migration, cell migration failure reason information, KPI information at a time point of completion of the cell migration, and scaling control request identifier (ID).

10. A computer-readable recording medium having recorded thereon instructions which, when executed by at least one processor, cause the at least one processor to:
determine a cell migration situation, based on information about a key performance indicator (KPI) of a first pod (300),
based on the determined cell migration situation, transmit, to the first pod (300), at least one cell migration message related to a second pod (400) with which the first pod is to perform cell migration, and
in case that the cell migration is terminated, receive a cell migration termination message from the first pod (300).

11. An electronic device (200) for controlling scaling in a virtual radio access network, the electronic device comprising:
a memory (210) one or more instructions:
a transceiver (230); and
at least one processor (200) configured to execute the one or more instructions, the at least one processor configured to:
determine a cell migration situation based on information about a key performance indicator (KPI) of a first pod (300) obtained using the transceiver,
based on determined the cell migration situation, transmit, to the first pod (300), at least one cell migration message related to a second pod (400) with which the first pod is to perform cell migration, and
in case that the cell migration is terminated, receive a cell migration termination message from the first pod (300) using the transceiver.

12. The electronic device of claim 11, wherein the information about the KPI comprises information about at least one of a number of user equipments (UEs) processed by a pod, a number of cells processed by the pod, a central processing unit (CPU) utilization, a memory usage, a throughput, a radio network temporary identifier (RNTI), a block error rate (BLER), and a reference signal received power (RSRP).

13. The electronic device of claim 11 or claim 12, wherein the at least one processor (200) is further configured to:
in case that the obtained KPI of the first pod (300) is less than or equal to a predetermined first value, determine the cell migration situation to be a scale-in situation, and
in case that the obtained KPI of the first pod (300) is greater than or equal to a predetermined second value, determine the cell migration situation to be a scale-out situation.

14. The electronic device of any one of claims 11 to 13, wherein the cell migration message comprises at least one of endpoint information about the first pod (300), endpoint information about the second pod (400), information about the cell migration situation, basis information about the cell migration situation, resource allocation information of the second pod (400), and a scaling control request identifier (ID).

15. The electronic device of any one of claims 11 to 14, wherein the cell migration termination message comprises at least one of information about a completion status of the cell migration, cell migration failure reason information, KPI information at a time point of completion of the cell migration, and a scaling control request identifier (ID) information.
